# EUROPEAN PATENT APPLICATION

(11) **EP 3 996 334 A1**
(43) Date of publication of application: **11.05.2022**
(21) Application number: 20834672.6
(22) Date of filing: 08.04.2020
(51) Int. Cl.: H04L 12/705

(54) **METHOD AND DEVICE FOR PACKET FORWARDING**

(30) Priority: 01.07.2019 CN 201910591843
(71) Applicant: ZTE Corporation, Shenzhen, Guangdong 518057 (CN)
(72) Inventor: XU, Benchong, Shenzhen, Guangdong 518057 (CN); WANG, Huilai, Shenzhen, Guangdong 518057 (CN)
(74) Representative: Novagraaf Technologies
(86) International application number: PCT/CN2020/083784
(87) International publication number: WO 2021/000619

(57) **Abstract**

Provided are a method and device for packet forwarding. The method comprises: interface direction information and a routing table issued by a control plane are received, where a route in the routing table carries a routing direction identifier; when a packet is received from an interface, a forwarding plane determines the interface direction of an incoming interface of the packet according to the interface direction information, and determines a routing direction of the packet according to the routing direction identifier; if the interface direction of the incoming interface matches the routing direction, then the packet is forwarded; and if not, then the packet is discarded. In the present invention, the control plane forwards the direction information of the interface to the forwarding plane according to a network topology, at the same time, the routing table issued by the control plane carries the routing direction identifier; when traffic is received from a certain interface, in addition to searching for a route according to the destination of the packet, the direction of the incoming interface of the traffic and the direction of the route also need to be matched, thus preventing the formation of a loop.

## Description

### Technical Field

The present invention relates to the field of communications, and in particular, to a method and device for packet forwarding.

### Background

A Spine-Leaf architecture is characterized by being easy to expand and capable of greatly improving network utilization and avoiding congestion, and has been a standard architecture implemented by a data center network. New metropolitan area networks and access networks may use this architecture widely in the future.

In the Spine-Leaf architecture, nodes pointing to Spine are in a north direction, nodes pointing to Leaf are in a south direction, and nodes pointing to the same level are in an east-west direction. In order to save a unicast routing table entry space, nodes tend to notify default routes to the south direction and detailed routes to the north direction. A loop occurs when a detailed routing table of south nodes is slow in issuing or fails to be issued due to failure causes.

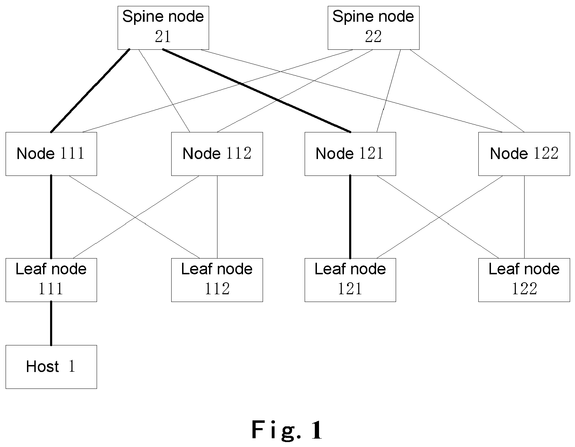

For example, in Fig. 1, Node111, Node112, Node121, and Node122 learn a default route 0.0.0.0/0 from Spine21 and Spine22, Leaf111 and Leaf112 learn a default route 0.0.0.0/0 from Node111 and Node112, and Leaf121 and Leaf122 learn a default route 0.0.0.0/0 from Node121 and Node122.

It is assumed that Leaf111 generates a detailed route 1.0.0.0/24 and notifies to Node111 and Node112 and floods to Spine21 and Spine22. For ease of description, it is assumed that Leaf121 sends a packet to destination 1.0.0.1 via Node121, Spine21, Node111, and Leaf111. At this moment, on a control plane, Leaf111 has a route 0.0.0.0/0 to Node111, Node111 has a route 0.0.0.0/0 to Spine21, Spine21 has a route 1.0.0.0/24 to Node111, Node111 has a route 1.0.0.0/24 to Leaf111 and a route 0.0.0.0/0 to Spine21, and Leaf111 has a route 1.0.0.0/24 to Host1 and a route 0.0.0.0/0 to Node111. When the route 1.0.0.0/24 on Leaf111 has not been issued to a forwarding plane due to device busyness or exception, the packet of destination 1.0.0.1 from Node111 hits 0.0.0.0/0, which is re-delivered to Node 111, and Node111 will deliver it to Leaf111 to form a loop. A loop is also formed between Spine21 and Node111 before the route 1.0.0.0/24 on Node111 is issued to the forwarding plane.

Due to the existence of a large number of Equal-Cost Multipath Routing (ECMP) links, it may be practical to form loops between adjacent levels, not necessarily between two fixed devices, but the effect is the same.

### Summary

Embodiments of the present invention provide a method and device for packet forwarding, so as to at least solve the problem of forming a loop due to a failure in issuing a detailed routing table in the related art.

According to an embodiment of the present invention, a method for packet forwarding is provided. The method may include the following steps. Interface direction information and a routing table issued by a control plane are received, where a route in the routing table carries a routing direction identifier. When a packet is received from an interface, a forwarding plane determines the interface direction of an incoming interface of the packet according to the interface direction information, and determines a routing direction of the packet according to the routing direction identifier. If the interface direction of the incoming interface matches the routing direction, then the packet is forwarded, and if not, then the packet is discarded.

The interface direction includes: an east-west direction, a south direction and a north direction. The routing direction includes: an east-west direction, a south direction and a north direction. In a network topology, the south direction is from a high-level node to a low-level node, the north direction is from a low-level node to a high-level node and the east-west direction is between same-level nodes.

Before interface direction information issued by the control plane is received, the method may further include the following step. The control plane is configured or dynamic learns interface direction information of a network topology, and issues the interface direction information to the forwarding plane.

The step that the routing direction of the packet is determined according to the routing direction identifier includes the following step. The routing table is searched according to a destination address in the packet, and a routing direction identifier corresponding to the found route is taken as the routing direction of the packet.

A default route or an aggregated route in the routing table carries a route direction identifier.

The method should be set as a Spine-Leaf architecture network.

According to another embodiment of the present invention, a device for packet forwarding is provided. The device may include: a receiving module, configured to receive interface direction information and a routing table issued by a control plane, wherein a route in the routing table carries a routing direction identifier; a determination module, configured to determine, when a packet is received from an interface, an interface direction of an incoming interface of the packet by a forwarding plane according to the interface direction information, and determine a routing direction of the packet according to the routing direction identifier; and a forwarding module, configured to forward the packet if the interface direction of the incoming interface matches the routing direction, and discard the packet if not.

The interface direction includes: an east-west direction, a south direction and a north direction. The routing direction includes: an east-west direction, a south direction and a north direction. In a network topology, the south direction is from a high-level node to a low-level node, the north direction is from a low-level node to a high-level node and the east-west direction is between same-level nodes.

The device may further include: an issuing module, configured to configure or dynamic learn interface direction information of a network topology, and issue the interface direction information to the forwarding plane.

The determination module includes: a searching unit, configured to search the routing table according to a destination address in the packet; and a determination unit, configured to take a routing direction identifier corresponding to the found route as the routing direction of the packet.

A default route or an aggregated route in the routing table carries a route direction identifier.

According to yet another embodiment of the present invention, a storage medium is also provided. The storage medium stores a computer program that, when run, performs the steps in the above method embodiments.

According to yet another embodiment of the present invention, an electronic device is also provided, which includes a memory and a processor. The memory stores a computer program. The processor is configured to run the computer program to perform the steps in the above method embodiments.

In the above embodiments of the present invention, the control plane forwards the direction information of the interface to the forwarding plane according to a network topology, at the same time, the routing table issued by the control plane carries the routing direction identifier; when traffic is received from a certain interface, in addition to searching for a route according to the destination of the packet, the direction of the incoming interface of the traffic and the direction of the route also need to be matched, a packet can be forwarded if the directions are matched, and the packet will be discarded if not matched, thus preventing the formation of a loop.

### Brief Description of the Drawings

The accompanying drawings described herein are used to provide a further understanding of the present invention, and constitute a part of the present application, and the exemplary embodiments of the present invention and the description thereof are configured to explain the present invention, but do not constitute improper limitations to the present invention. In the drawings:
Fig. 1 is a schematic diagram of a Spine-Leaf network topology according to the related art;
Fig. 2 is a flowchart of a method for packet forwarding according to an embodiment of the present invention;
Fig. 3 is a schematic structural diagram of a device for packet forwarding according to an embodiment of the present invention;
Fig. 4 is a schematic structural diagram of a device for packet forwarding according to another embodiment of the present invention;
Fig. 5 is a schematic diagram of a Spine-Leaf network topology with a south-north connection according to an embodiment of the present invention; and
Fig. 6 is a schematic diagram of a Spine-Leaf network topology with an east-west connection according to an embodiment of the present invention.

### Detailed Description of the Embodiments

The present invention will be described in detail below with reference to the drawings in conjunction with the embodiments. It should be noted that in the case of no conflict, the features in the embodiments and the embodiments in the present application may be combined with each other.

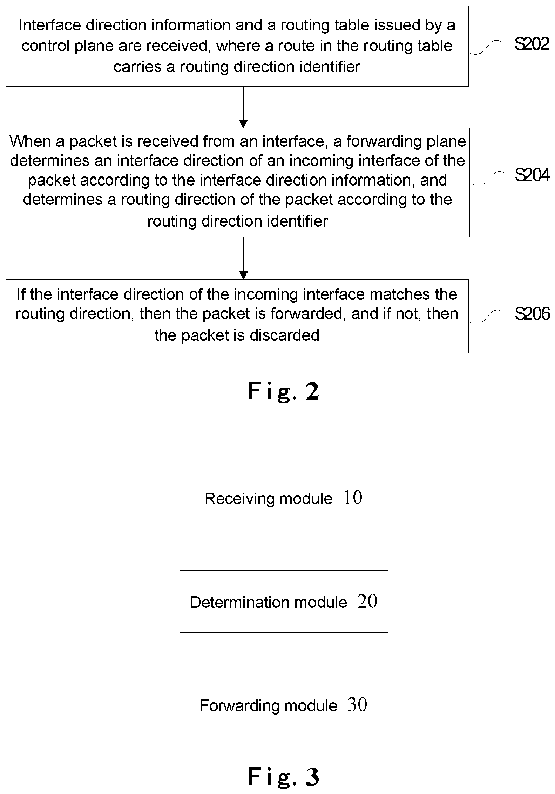

With regard to the problem of forming a loop due to slow issuing of a detailed routing table or failure in issuing the detailed routing table by a forwarding plane in a Spine-Leaf architecture network, a method for packet forwarding capable of preventing a loop is provided in the present embodiment. Fig. 2 is a flowchart of a method for packet forwarding according to an embodiment of the present invention. As shown in Fig. 2, the flow includes the following steps.

In step S202, interface direction information and a routing table issued by a control plane are received, where a route in the routing table carries a routing direction identifier.

In step S204, when a packet is received from an interface, a forwarding plane determines an interface direction of an incoming interface of the packet according to the interface direction information, and determines a routing direction of the packet according to the routing direction identifier.

In step S206, if the interface direction of the incoming interface matches the routing direction, then the packet is forwarded, and if not, then the packet is discarded.

In the above embodiment, the interface direction includes: an east direction, a west direction, a south direction and a north direction. The routing direction includes: an east-west direction, a south direction and a north direction. In a network topology, the south direction is from a high-level node to a low-level node, the north direction is from a low-level node to a high-level node and the east direction or the west direction is between same-level nodes.

Before step S202, the method further includes the following step. The control plane is configured or dynamic learns interface direction information of a network topology, and issues the interface direction information to the forwarding plane.

In step S204, the routing table may be searched according to a destination address in the packet, and a routing direction identifier corresponding to the found route may be taken as the routing direction of the packet.

In the above embodiment, a default route or an aggregated route in the routing table carries a route direction identifier.

It should be noted that although a Spine-Leaf architecture network is taken as an example in the present embodiment, the solution provided by the present embodiment is also applicable to, for example, boundary nodes in different levels of Intermediate System to Intermediate System (ISIS) and boundary nodes in different regions of Open Shortest Path First (OSPF) in a network with a regional division or level relationship.

In the above embodiments, the control plane firstly forwards the direction information of the interface to the forwarding plane according to a network topology, at the same time, the routing table issued by the control plane carries a direction field; when traffic is received from a certain interface, in addition to searching for a route according to the destination of the packet, the direction of the incoming interface of the traffic and the direction of the route also need to be matched, a packet can be forwarded if the directions are matched, and the packet will be discarded if not matched, thus preventing the formation of a loop.

Through the description of the above implementations, those skilled in the art can clearly understand that the method according to the above embodiment may be implemented by means of software plus a necessary general hardware platform, and of course, may also be implemented through hardware, but in many cases, the former is a better implementation. Based on such understanding, the technical solution of the present invention, which is essential or contributes to the conventional art, may be embodied in the form of a software product stored in a storage medium (such as a Read-Only Memory (ROM) or a Random Access Memory (RAM), a magnetic disk and an optical disc), including a number of instructions for causing a terminal device (which may be a mobile phone, a computer, a server, or a network device, etc.) to perform the methods described in various embodiments of the present invention.

In the present embodiment, a device for packet forwarding capable of preventing a loop is also provided. The device is configured to implement the above embodiments and preferred implementations. Those have not been described will not be elaborated. As used below, the term "module" may implement a combination of software and/or hardware of a predetermined function. Although the device described in the following embodiments is preferably implemented by software, hardware or a combination of software and hardware is also possible and conceived.

Fig. 3 is a structural block diagram of a device for packet forwarding according to an embodiment of the present invention. As shown in Fig. 3, the device includes a receiving module 10, a determination module 20 and a forwarding module 30.

The receiving module 10 is configured to receive interface direction information and a routing table issued by a control plane. A route in the routing table carries a routing direction identifier. The determination module 20 is configured to determine, when a packet is received from an interface, an interface direction of an incoming interface of the packet by a forwarding plane according to the interface direction information, and determine a routing direction of the packet according to the routing direction identifier. The forwarding module is configured to forward the packet if the interface direction of the incoming interface matches the routing direction, and discard the packet if not.

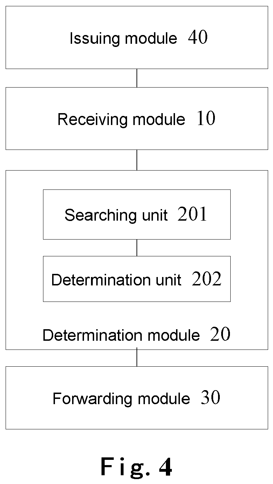

Fig. 4 is a structural block diagram of a device for packet forwarding according to another embodiment of the present invention. As shown in Fig. 4, the device further includes an issuing module 40 in addition to all the modules as shown in Fig. 3. The issuing module 40 is configured to configure or dynamic learn interface direction information of a network topology, and issue the interface direction information to the forwarding plane. The determination module 20 further includes a searching unit 201 and a determination unit 202. The searching unit 201 is configured to search the routing table according to a destination address in the packet. The determination unit 202 is configured to take a routing direction identifier corresponding to the found route as the routing direction of the packet.

It should be noted that each of the above modules may be implemented by software or hardware. For the latter, it may be implemented by, but not limited to, the following manners that the above modules are all located in the same processor; or, the above modules are located in different processors in any combination form respectively.

In order that the present invention may be more readily understood, a detailed description is made below with specific application embodiments.

### Embodiment 1

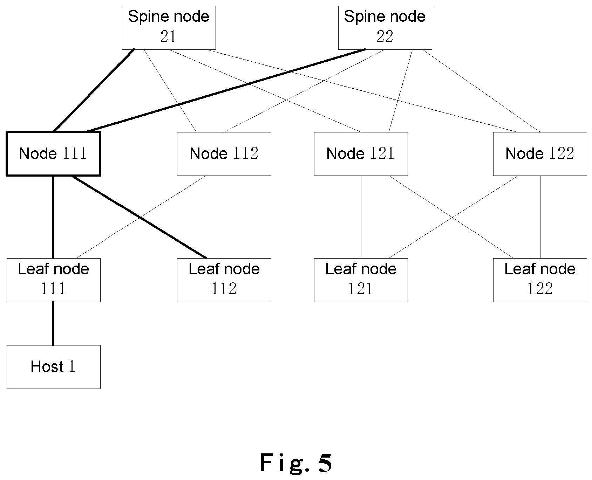

As shown in Fig. 5, Spine21 and Spine22 are 2-level nodes, Node111, Node112, Node121 and Node122 are 1-level nodes, and Leaf111, Leaf112, Leaf121 and Leaf122 are 0-level nodes. High-level nodes are in a north direction of low-level nodes, low-level nodes are in a south direction of high-level nodes, and the same-level nodes are in an east-west direction.

In the present embodiment, a forwarding plane matches a default route, and then direction check is required. As shown in Fig. 5, for the ease of description, it is assumed that a Host1 address is 1.0.0.1, an interface network segment connected with Leaf111 is 1.0.0.0/24, and a packet passes from Leaf121 to Host1 via Node121, Spine21, Node111 and Leaf111.

An interface direction is first manually configured or dynamically learned (e.g. dynamically learned by a thrift protocol) at a control plane, and the interface direction is issued to the forwarding plane.

Taking Node111 in Fig. 5 as an example, an interface connected with Leaf111 and Leaf112 is set with a south identifier and an interface connected with Spine21 and Spine22 is set with a north identifier on Node111. An interface connected with Node111 and Node112 is set with a north identifier and other interfaces are set with south identifiers on Leaf111.

There is a default route 0.0.0.0/0 on Node111, with an outgoing interface pointing to Spine21 and Spine22, and there is a detailed route 1.0.0.0/24, with an outgoing interface pointing to Leaf111. There is a default route 0.0.0.0/0 on Leaf111, with an outgoing interface pointing to Node111 and Node112, and there is a detailed route 1.0.0.0/24, with an outgoing interface pointing to Host1.

The issued default route of the forwarding plane carries a direction identifier, and after hitting, forwarding is allowed only if the direction of the route matches the direction of an incoming interface of the traffic, and if not, then the packet is discarded. For example, the default route 0.0.0.0/0 issued by Node111 in Fig. 5 is set with a south identifier, and after hitting, the traffic coming from a south interface (an interface connected with Leaf111 and Leaf112) is forwarded, and the rest is discarded. The default route 0.0.0.0/0 issued by Leaf111 is set with a south identifier, and after hitting, the traffic coming from a south interface (an interface connected with Host1) is forwarded, and the rest is discarded.

Assuming that a detailed route 1.0.0.0/24 on Node111 is not issued to the forwarding plane, a packet with a destination of 1.0.0.1 coming from Spine21 will be matched to the default route, and then the direction check is performed. It is found that the direction of the route is identified as a south direction, the direction of the interface is identified as a north direction, and the packet is discarded. The packet can be effectively prevented from being re-forwarded to Spine21 through the default route.

Assuming that a detailed route 1.0.0.0/24 on Leaf111 is not issued to the forwarding plane, a packet with a destination of 1.0.0.1 coming from Node111 will be matched to the default route, and then the direction check is performed. It is found that the direction of the route is identified as a south direction, the direction of the interface is identified as a north direction, and the packet is discarded. The packet can be effectively prevented from being re-forwarded to Node111 through the default route.

It should be noted that in the present embodiment, if the default route is replaced with an aggregated route, the forwarding method may also effectively prevent the formation of a loop.

### Embodiment 2

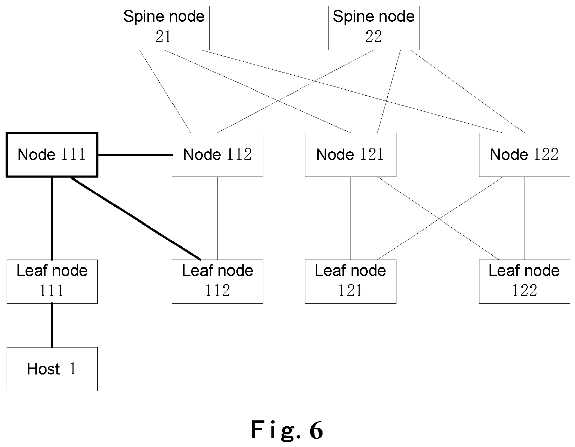

In the present embodiment, a forwarding plane matches a default route, then direction check is required, and a Spine-Leaf network forwarding an east-west path is contained. As shown in Fig. 6, for the ease of description, it is assumed that a Host1 address is 1.0.0.1, an interface network segment connected with Leaf111 is 1.0.0.0/24, and a packet passes from Leaf121 to Host1 via Node121, Spine21, Node112, Node111 and Leaf111.

An interface direction is first manually configured or dynamically learned (e.g. dynamically learned by a thrift protocol) at a control plane, and the interface direction is issued to the forwarding plane.

For example, an interface connected with Leaf111 and Leaf112 is set with a south identifier and an interface connected with Node112 is set with an east-west identifier on Node111 in Fig. 6.

The behavior on Leaf111 in the present embodiment is identical to that in Embodiment 1 and will not be repeated.

There is a default route 0.0.0.0/0 on Node111, with an outgoing interface pointing to Node112, and there is a detailed route 1.0.0.0/24, with an outgoing interface pointing to Leaf111.

The issued default route of the forwarding plane carries a direction identifier, and after hitting, forwarding is allowed only if the direction of the route matches the direction of an incoming interface of the traffic, and if not, then the packet is discarded. For example, the default route 0.0.0.0/0 issued by Node111 in Fig. 6 is set with a south identifier, and after hitting, the traffic coming from a south interface (an interface connected with Leaf111 and Leaf112) is forwarded, and the rest is discarded.

Assuming that a detailed route 1.0.0.0/24 on Node111 is not issued to the forwarding plane, a packet with a destination of 1.0.0.1 coming from Node112 will be matched to the default route, and then the direction check is performed. It is found that the direction of the route is identified as a south direction, the direction of the interface is identified as an east-west direction, and the packet is discarded, thereby effectively preventing the packet from being re-forwarded to Node112 through the default route.

It should be noted that in the present embodiment, if the default route is replaced with an aggregated route, the forwarding method may also effectively prevent the formation of a loop.

### Embodiment 3

In the present embodiment, a forwarding plane matches a route carrying a direction identifier, and then direction check is required. As shown in Fig. 6, for the ease of description, it is assumed that a Host1 address is 1.0.0.1, an interface network segment connected with Leaf111 is 1.0.0.0/24, and a packet passes from Leaf121 to Host1 via Node121, Spine21, Node112, Node111 and Leaf111.

An interface direction is first manually configured or dynamically learned (e.g. dynamically learned by a thrift protocol) at a control plane, and the interface direction is issued to the forwarding plane.

For example, an interface connected with Leaf111 and Leaf112 is set with a south identifier and an interface connected with Node112 is set with an east-west identifier on Node111 in Fig. 6. An interface connected with Node111 is set with a north identifier, and other interfaces are set with south identifiers on Leaf111.

There is a default route 0.0.0.0/0 on Node111, with an outgoing interface pointing to Node112, and there is a detailed route 1.0.0.0/24, with an outgoing interface pointing to Leaf111. There is a default route 0.0.0.0/0 on Leaf111, with an outgoing interface pointing to Node111 and Node112, and there is a detailed route 1.0.0.0/24, with an outgoing interface pointing to Host1.

The issued route of the forwarding plane carries a direction identifier, and after hitting, forwarding is allowed only if the direction of the route matches the direction of an incoming interface of the traffic, and if not, then the packet is discarded. For example, the default route 0.0.0.0/0 issued by Node111 in Fig. 6 is set with a south identifier, and after hitting, the traffic coming from a south interface (an interface connected with Leaf111 and Leaf112) is forwarded, and the rest is discarded. The detail route 1.0.0.0/24 issued by Node111 is set with an east-west identifier, and after hitting, the traffic coming from an east-west interface (an interface connected with Node112) is forwarded, and the rest is discarded. The default route 0.0.0.0/0 issued by Leaf111 is set with a south identifier, and after hitting, the traffic coming from a south interface (an interface connected with Host1) is forwarded, and the rest is discarded. The detail route 1.0.0.0/24 issued by Leaf111 is set with a south identifier, and after hitting, the traffic coming from a south interface (an interface connected with Host1) is forwarded, and the rest is discarded.

In the above embodiments, route matching can be performed by using the direction as one of the keys, i.e., after the traffic enters, the direction is acquired from the incoming interface of the traffic, and a table is searched by using a Virtual Private Network Identity (vpnid) + direction + destination. The table may also be searched by using a vpnid + destination in a conventional manner, and after hitting, the identifier of the incoming interface of the traffic is compared with the identifier of the routing table.

If the routing table does not carry a direction identifier, then traffic coming from any direction should be forwarded. If the interface does not carry a direction identifier, then traffic received from the interface is forwarded normally regardless of whether the hit entry carries a direction identifier.

An embodiment of the present invention also provides a storage medium. The storage medium stores a computer program. he computer program is configured to perform the steps in any one of the above method embodiments when run.

Optionally, in the present embodiment, the storage medium may include, but is not limited to, various media capable of storing a computer program such as a U disk, a ROM, a RAM, a mobile hard disk, a magnetic disk or an optical disc.

An embodiment of the present invention also provides an electronic device, which includes a memory and a processor. The memory stores a computer program. The processor is configured to run the computer program to perform the steps in the above method embodiments.

It is apparent that a person skilled in the art shall understand that all of the above-mentioned modules or steps in the present invention may be implemented by using a general calculation device, may be centralized on a single calculation device or may be distributed on a network composed of multiple calculation devices. Optionally, they may be implemented by using executable program codes of the calculation devices. Thus, they may be stored in a storage device and executed by the calculation devices, the shown or described steps may be executed in a sequence different from this sequence under certain conditions, or they are manufactured into each integrated circuit module respectively, or multiple modules or steps therein are manufactured into a single integrated circuit module. Thus, the present invention is not limited to the combination of any specific hardware and software.

The above descriptions are only the preferred embodiments of the present invention and are not intended to limit the present invention. As will occur to those skilled in the art, the present invention is susceptible to various modifications and changes. Any modifications, equivalent replacements, improvements and the like made within the spirit and principle of the present invention should be included within the scope of protection of the present invention.

## Claims

1. A method for packet forwarding, comprising:
receiving interface direction information and a routing table issued by a control plane, wherein a route in the routing table carries a routing direction identifier;
when a packet is received from an interface, determining, by a forwarding plane, an interface direction of an incoming interface of the packet according to the interface direction information, and determining a routing direction of the packet according to the routing direction identifier; and
if the interface direction of the incoming interface matches the routing direction, then forwarding the packet, and if not, then discarding the packet.

2. The method according to claim 1, wherein the interface direction comprises: an east-west direction, a south direction and a north direction, the routing direction comprises: an east-west direction, a south direction and a north direction, and in a network topology, the south direction is from a high-level node to a low-level node, the north direction is from a low-level node to a high-level node and the east-west direction is between same-level nodes.

3. The method according to claim 1, wherein before receiving the interface direction information issued by the control plane, the method further comprises:
configuring or dynamic learning, by the control plane, interface direction information of a network topology, and issuing the interface direction information to the forwarding plane.

4. The method according to claim 1, wherein determining the routing direction of the packet according to the routing direction identifier comprises:
searching the routing table according to a destination address in the packet, and taking a routing direction identifier corresponding to the found route as the routing direction of the packet.

5. The method according to claim 1, wherein a default route or an aggregated route in the routing table carries a route direction identifier.

6. The method according to any one of claims 1 to 5, wherein the method is applied to a Spine-Leaf architecture network.

7. A device for packet forwarding, comprising:
a receiving module, configured to receive interface direction information and a routing table issued by a control plane, wherein a route in the routing table carries a routing direction identifier;
a determination module, configured to determine, when a packet is received from an interface, an interface direction of an incoming interface of the packet by a forwarding plane according to the interface direction information, and determine a routing direction of the packet according to the routing direction identifier; and
a forwarding module, configured to forward the packet if the interface direction of the incoming interface matches the routing direction, and discard the packet if not.

8. The device according to claim 7, wherein the interface direction comprises: an east-west direction, a south direction and a north direction, the routing direction comprises: an east-west direction, a south direction and a north direction, and in a network topology, the south direction is from a high-level node to a low-level node, the north direction is from a low-level node to a high-level node and the east-west direction is between same-level nodes.

9. The device according to claim 7, further comprising:
an issuing module, configured to configure or dynamic learn interface direction information of a network topology, and issue the interface direction information to the forwarding plane.

10. The device according to claim 7, wherein the determination module comprises:
a searching unit, configured to search the routing table according to a destination address in the packet; and
a determination unit, configured to take a routing direction identifier corresponding to the found route as the routing direction of the packet.

11. The device according to claim 10, wherein a default route or an aggregated route in the routing table carries a route direction identifier.

12. A storage medium, having a computer program stored therein, wherein the computer program is configured to run to perform the method according to any one of claims 1 to 6.

13. An electronic device, comprising a memory and a processor, wherein the memory stores a computer program, and the processor is configured to run the computer program to perform the method according to any one of claims 1 to 6.
